# EUROPEAN PATENT APPLICATION

(11) **EP 3 188 015 A1**
(43) Date of publication of application: **05.07.2017**
(21) Application number: 15188279.2
(22) Date of filing: 05.10.2015
(51) Int. Cl.: G06F 9/50, H04N 21/637, H04N 21/658

(54) **REQUESTING AND RECEIVING A MEDIA STREAM WITHIN A NETWORKED SYSTEM**

(71) Applicant: Axis AB, 223 69 Lund (SE)
(72) Inventor: Hartzell, Ted, 234 34 LOMMA (SE); Olsson, Staffan, 244 60 FURULUND (SE); Henriksson, Henrik, 253 74 Helsingborg (SE); Ranbro, Mikael, 241 35 ESLÖV (SE); Myrnäs, Ralph, 226 49 LUND (SE); Olsson, Fredrik, 224 79 LUND (SE); Jansson, Erik, 212 17 MALMÖ (SE); Ahlfors, Ulf, 24657 Barsebäck (SE)
(74) Representative: Awapatent AB

(57) **Abstract**

A method for requesting and receiving a media stream within a networked system is provided. The networked system comprising a client, a media service register and a media service manager, all arranged to communicate within a data network comprising a plurality of networked computing devices. The method comprising: sending, from the client, a media request for the media stream, to the media service register, the media service register comprising a register of identifiers of active media stream generating services generating media streams within the data network and an address for accessing each corresponding media stream generating service; checking, at the media service register, if the media request corresponds to an active media stream generating service generating the requested media stream; when the media request does not correspond to an active media stream generating service, sending an activation request to the media service manager for a media stream generating service generating the requested media stream; sending, from the media service manager, an instruction to install the requested media stream generating service at at least one of the plurality of networked computing devices; and receiving, at the client, the media stream generated by the installed media stream generating service.

## Description

### Field of the invention

The invention relates to requesting and receiving a media stream within a networked system.

### Background of the invention

Services in a data network for delivering media streams are common today. Depending on requirements of various clients of the data network the source data captured or stored at a media generating device of the data network may be transformed to a specific output format. The media streams in the data network are generated by means of a media stream generating service deployed at a media generating device of the data network. Examples of media stream generating services are DirectShow by Microsoft^{®} and gstreamer.

The amount of media streams delivered in data networks are rapidly increasing. With increasing amount of media streams being delivered on today's data network there is an increased demand of available bandwidth within the data network. There is also a risk of introducing bottlenecks within the data network.

### Summary of the invention

It is an object of the present invention to solve at least some of the problem mentioned above.

According to a first aspect a method for requesting and receiving, at a client, a media stream in a system comprising the client, a media service register and a media service manager, all arranged to communicate within a data network comprising a plurality of networked computing devices is provided. The method comprises: sending, from the client, a media request for the media stream, to the media service register, the media service register comprising a register of identifiers of active media stream generating services generating media streams within the data network and an address for accessing each corresponding media stream generating service; checking, at the media service register, if the media request corresponds to an active media stream generating service generating the requested media stream; when the media request does not correspond to an active media stream generating service, sending an activation request to the media service manager for a media stream generating service generating the requested media stream; sending, from the media service manager, an instruction to install the requested media stream generating service at at least one of the plurality of networked computing devices; and receiving, at the client, the media stream generated by the installed media stream generating service.

The method provide the ability to coordinate and optimize all media stream generating services in the networked system; this by considering the utility of the networked system as a whole rather than just the media stream generating services individually. Hence, according to this method a networked system may be set up wherein the delivery of media streams generated by media stream generating services may be optimized resulting in optimized usage of bandwidth within the networked system, CPU power and memory of the different networked computing devices. This because the media service manager may set up non existing media stream generating services in an optimized manner. Moreover, network, CPU and memory load can be minimized when the data of the active media streams can be minimized to what clients actually require. Furthermore, client applications become easier to develop because the possibilities when developing new applications are not restricted to the formats and capabilities of individual networked computing devices, but rather the capabilities of the system as a whole.

The method may further comprise selecting, by the media service manager, a networked computing device to which the instruction to install the requested media stream generating service is to be sent, wherein the selection is based on at least one of data relating to network load of branches within the data network, available CPU processing power in the plurality of networked computing devices, availability of specific hardware or software capability in the plurality of networked computing devices, robustness of the plurality of networked computing devices, robustness of the branches within the data network, and nearness. A branch within the data network refers to a sub-portion of the data network. Robustness refers to uptime of a networked computing device and its connections. Hence, robustness of a branch of the data network refers to uptime of the branch. For example, robustness can be measured as the percent of time device have been available. According to a non-limiting example the robustness may be expressed as how long time a device has been available divided by the time it was not available. Nearness refers to distance between two devices of the data network. The nearness may be expressed in meters, the number of network jumps, latency and/or bandwidth. The two devices are *near* refers to more efficient use of resources for communication and data transfer between the two devices.

The method may further comprise receiving at the client a message comprising information instructing the client to retrieve the requested media stream from the installed media stream generating service.

The method may further comprise storing at the media service register an identification of the installed media stream generating service and an address for accessing the same.

The installed media stream generating service may be arranged to generate a media stream from one or more already existing media streams by transcoding, splitting and/or stitching the one or more already existing media streams.

The media stream request may comprise a media stream quality and/or a media stream origin.

According to a second aspect a networked system for setting up a media stream generating service within a data network is provided. The system comprising a plurality of networked computing devices, a client, a media service register and a media service manager, all arranged to communicate within the data network. The client is arranged to send a media request for the media stream to the media service register. The media service register comprises a register of identifiers of active media stream generating services generating media streams within the data network and an address for accessing each corresponding media stream generating service. Moreover, the media service register further comprises a media request checker arranged to check if the media request corresponds to an active media stream generating service generating the media stream. Furthermore, the media service register comprises a media stream generating service activator arranged to, when the media request does not correspond to an active media stream generating service, send an activation request to the media service manager for a media stream generating service generating the media stream. The media service manager comprises an installer arranged to send an installation instruction to at least one of the plurality of networked computing devices instructing the at least one of the plurality of networked computing devices to install the requested media stream generating service.

The client may further comprise a media stream receiver arranged to receive the media stream generated by the installed media stream generating service from the at least one of the plurality of networked computing devices.

The media service manager may further comprise a networked computing device selector arranged to select a networked computing device onto which the requested media stream generating service to be installed, wherein the selection is based on at least one of data relating to network load of branches within the data network, available CPU processing power in the plurality of networked computing devices, availability of specific hardware or software capability in the plurality of networked computing devices, robustness of the branches within the data network, robustness of the plurality of networked computing devices and nearness.

The above mentioned features of the method, when applicable, apply to this second aspect as well. In order to avoid undue repetition, reference is made to the above.

According to a third aspect a media service manager for setting up a media stream generating service generating a media stream within a networked system comprising a plurality of networked computing devices and the media service manager, all communicating within a data network, is provided. The media service manager comprises: a media stream generating service activation request receiver arranged to receive an activation request for the media stream generating service generating the media stream; and an installer arranged to send an installation instruction to at least one of the plurality of networked computing device, wherein the installation instruction comprises an instruction for installing the media stream generating service on the networked computing device.

The media service manager may further comprise a networked computing device selector arranged to select a networked computing device onto which the requested media stream generating service in to be installed, wherein the selection is based on at least one of data relating to network load of branches within the data network, available CPU processing power in the plurality of networked computing devices, availability of specific hardware or software capability in the plurality of networked computing devices, robustness of the branches within the data network, robustness of the plurality of networked computing devices and nearness.

The media service manager may further comprising a database comprise media stream generating service generating software program portions possible to be installed at one or more of the plurality of networked computing devices as the media stream generating service.

The above mentioned features of the method and networked system, when applicable, apply to this third aspect as well. In order to avoid undue repetition, reference is made to the above.

A further scope of applicability of the present invention will become apparent from the detailed description given below. However, it should be understood that the detailed description and specific examples, while indicating preferred embodiments of the invention, are given by way of illustration only, since various changes and modifications within the scope of the invention will become apparent to those skilled in the art from this detailed description.

Hence, it is to be understood that this invention is not limited to the particular component parts of the device described or steps of the methods described as such device and method may vary. It is also to be understood that the terminology used herein is for purpose of describing particular embodiments only, and is not intended to be limiting. It must be noted that, as used in the specification and the appended claim, the articles "a," "an," "the," and "said" are intended to mean that there are one or more of the elements unless the context clearly dictates otherwise. Thus, for example, reference to "a unit" or "the unit" may include several devices, and the like. Furthermore, the words "comprising", "including", "containing" and similar wordings does not exclude other elements or steps.

### Brief description of the drawings

These and other aspects of the present invention will now be described in more detail, with reference to the appended drawings showing embodiments of the invention. The figures are provided to illustrate the general structures of embodiments of the present invention. Like reference numerals refer to like elements throughout.
Fig. 1 is a schematic block diagram of a networked system.
Fig. 2 is an alternative block diagram of the networked system of Fig. 1.
Fig. 3 is a flowchart of a method for requesting and receiving a media stream within the networked system.
Figs 4a and 4b are timing diagrams showing communication in the networked system.

### Detailed description

The present invention will now be described more fully hereinafter with reference to the accompanying drawings, in which currently preferred embodiments of the invention are shown. This invention may, however, be embodied in many different forms and should not be construed as limited to the embodiments set forth herein; rather, these embodiments are provided for thoroughness and completeness, and to fully convey the scope of the invention to the skilled person.

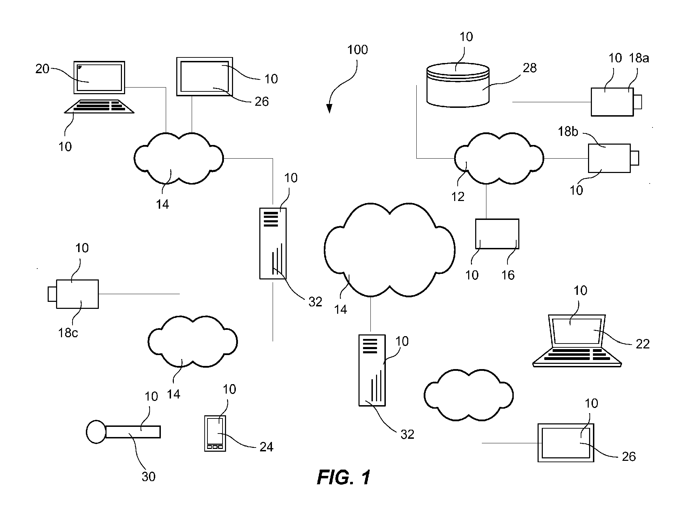

Fig. 1 illustrates a networked system 100 comprising a plurality of networked computing devices 10 interconnected via a data network. A networked computing device 10 is a device that is configured to carry out a set of arithmetic or logical operations. Typically, the networked computing device 10 may be programmed to carry out the set of arithmetic or logical operations. By being networked the networked computing device 10 is arranged to send and/or receive data to and/or from other computing devices. The networked computing device 10 comprises a central processing unit (CPU) and a non-transitory and/or transitory memory.

The data network relates to a network which allows the networked computing devices 10 to exchange data. The networked computing devices 10 pass data to each other along network links of the data network. Typically, data is transferred in the form of packets. Connections between networked computing devices 10 of the data network are established using either cables or wirelessly. Non limiting examples of data networks are the Internet, an intranet, a local area network and a cellular network. Parts of the data network may be a private data network 12. Parts of the data network may be a public data network 14. The private network 12 may be connected to the public network 14 by a network access limiting device 16. The network access limiting device 16 may be a firewall installed to protect the private network. The network access limiting device 16 may be a device performing Network Address Translation, NAT.

Non-limiting examples of networked computing devices 10 are network access limiting devices 16, networked cameras 18a, 18b, 18c, stationary computers 20, laptops 22, mobile phones 24, tablets 26, media storage devices 28, audio registering devices 30, and servers 32. It is to be understood that the networked system 100 may comprise other networked computing devices 10 than the ones listed above. The data network 100 may comprise fever networked computing devices 10 than the ones illustrated in Fig. 1. The data network 100 may comprise more networked computing devices 10 than the ones illustrated in Fig. 1.

All or at least some of the networked computing devices 10 of the networked system 100 are arranged to run software for dynamic deployment, execution and/or management of media stream generating services within the system 100. A media stream generating service is configured to generate a media stream to be delivered to at least one of the plurality of networked computing devices 10 acting as a client. The media stream generating service may be configured to work on a single one of the plurality of networked computing devices 10. Alternatively, the media stream generating service may be distributed onto several of the plurality of networked computing devices 10. The client is a networked computing device 10 having the ability to request, receive and/or play a media stream. The media stream is media data that is streamed on the data network. Streaming refers to the process of delivering media data as a media stream. Hence, the term streaming refers to the delivery method of media data rather than the media itself. Examples of media data are sound and video.

The media data is generated at a media generating device. The media generating device is a device that is configured to generate media data. The media generating device may be one of the plurality of networked devices 10. Alternatively, the media generating device may be a device connected to one of the plurality of networked devices 10. Non-limiting examples of media generating devices are video cameras (e.g. thermal video cameras and monitoring video cameras) and audio registering devices (e.g. microphones). The video cameras are exemplified in the networked system 100 of Fig. 1 as the networked cameras 18a, 18b, 18c. The audio registering devices are exemplified in the networked system 100 of Fig. 1 as audio registering device 30. Alternatively, or in combination, the media generating device may be a computing device configured to render video and/or to synthesize audio. Hence, any one of the stationary computer 20, the laptop 22, the mobile phone 24, the tablet 26, the media storage device 28, or the server 32 may act as a media generating device.

The media generating device may act as a media source. Alternatively, media data may be produced by the media generating device and then stored on a media storage device 28, the media storage device 28 then acting as the media source. A media generating device may act as both a media generating device and as a media storage device. For example a networked computing device 10 in the form of a video camera may be configured both to generate media in the form of a video and to store the generated video on a memory of the video camera. Hence, the media source is a networked computing device 10 arranged to capture and/or store media as media data. The media source is further arranged to send the captured and/or stored media data on the data network as a media stream. The sending of the media stream may be initiated by instructions from a media stream generating service.

The media stream generating service is configured to generate a media stream; the media stream having characteristics being set by the client requesting the media stream. Characteristics of the media stream are properties affecting the perception of the media stream upon playback of the same and/or properties affecting the size of the data representing the media stream. Non-limiting examples of characteristics of the media stream are data format (e.g. type of encoding), resolution, frame rate, contrast, rate of compression, and bitrate. Moreover, the client is also configured to request a media stream having a specific content. The content may e.g. be media from two or more media sources that are to be combined or media generated at a specific media generating device.

Active media stream generating services in the networked system 100 are registered in a media service register. The media service register refers to a software and/or hardware implemented register/database comprising entries of identifiers representing active media stream generating services generating media streams within the networked system 100 and an address for accessing each corresponding media stream generating service. The address for accessing a media stream generating service is a unique address identifying a specific media stream generating service. The address for accessing a media stream generating service may e.g. be a string of characters unique for each media stream generating service. According to a non-limiting example a syntax similar to a URL may be used. The address may comprise a domain ID, a network ID, a network computing device ID, or a media stream generating service ID. This address may then be translated into a protocol-dependent address to which messages are routed.

Hence, the media service register is a register/database keeping track of available/active media stream generating services in the networked system 100. The media service register may be comprised in a specific networked computing device 10 within the networked system 100. Alternatively, the media service register may be distributed on a plurality of the networked computing devices 10 within the networked system 100. Also, information pertaining to a point of generation of the media stream, the point of delivery of the media stream, the bitrate of the media stream, the latency of the media stream and general state of the media stream may be stored in the media service register. The media stream generating services in the networked system 100 produce a workload on processors, network, memory or other critical resources of the data network itself or the networked computing devices 10.

As mentioned above the media stream generating service is a software program installed on a networked computing device 10. Alternatively, the media stream generating service may be distributed on a plurality of networked computing devices 10. The media stream generating service is arranged to generate a media stream. The media stream generating service is arranged to generate a media stream from one or more already existing media streams or by starting a media stream from a media source. Non-limiting examples of media stream generating services are a media stream trigger, a media stream transcoder, a media stream splitter and a media stream stitcher.

The media stream trigger is configured to trigger the start of a new media stream.

The media stream transcoder is configured to transcode/convert an encoded media stream into a media stream being differently encoded. Hence, an incoming first encoded media stream is converted into an outgoing second encoded media stream, wherein the first and second media streams are encoded differently. The first and second media streams are different media streams typically having different media quality. Non-limiting examples of transcoding are converting an audio media stream from ACC to MP3, rescaling of a video media stream, altering of frame rate of a video media stream, or converting a video media stream from Mpeg4 to AVI. Transcoding is usually done in cases where a target device, in this case the client, does not support the format of the already active media stream generating service or has limited storage capacity that mandates a reduced file size or to convert incompatible or obsolete data to a better-supported or modern format. Moreover, transcoding may be used in case of limited capacity of the data network.

The media stream splitter is configured to split a media stream into two or more media streams.

The media stream stitcher is configured to combine/stitch two or more media streams into one media stream.

The networked system 100 further comprises a media service manager. The media service manager is a software and/or hardware implemented server. The media service manager may be comprised in a specific networked computing device 10 within the networked system 100. Alternatively, the media service manager may be distributed on a plurality of the networked computing devices 10 within the networked system 100.

The media service manager is arranged to frequently monitor the networked system 100 to be aware of bottlenecks of the data network and/or scarce resources or other performance implications of the networked devices 10. The media service manager is further arranged to monitor media streams within the system to be able to optimize the flow of data. This may be done by polling the media service register, or by subscribing to changes in the media service register. The media service manager is further arranged to determine an optimal path for the requested media stream to reach the client. This may be done by weighing the needs of the request (e.g. low latency or high bandwidth) against the load it will incur on members of the networked system and/or the needs of active media stream generating services generating media streams.

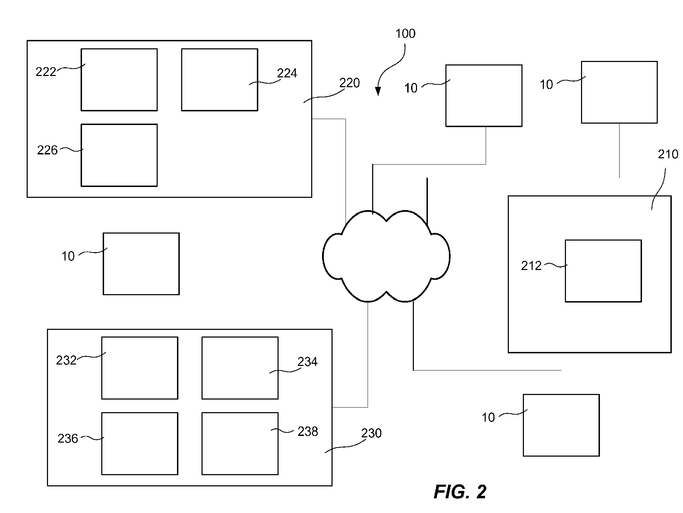

In Fig. 2 an alternative block diagram of a networked system 100 is illustrated. The networked system comprises a client 210, a media service register 220, a media service manager 230 and a plurality of networked computing devices 10. As discussed above the client is a networked computing device 10. Moreover, as also discussed above the media service register 220 may be comprised in a specific networked computing device 10 within the networked system 100. Alternatively, the media service register 220 may be distributed on a plurality of the networked computing devices 10 within the networked system 200. Furthermore, as also discussed above the media service manager 230 may be comprised in a specific networked computing device 10 within the networked system 100. Alternatively, the media service manager 230 may be distributed on a plurality of the networked computing devices 10 within the networked system 100.

In addition to what is discussed above, the client 210 comprises a media requester 212 arranged to send a media request for a media stream to the media service register. Moreover, the client210 is arranged to receive media streams generated by media stream generating services within the networked system. The media requester 212 may be hardware and/or software implemented.

In addition to what is discussed above, the media service register 220 comprises a register 222 of identifiers of active media stream generating services generating media streams within the data network and an address for accessing each corresponding media stream generating service. The media service register 220 further comprises a media request checker 224 arranged to check if the media request corresponds to an active media stream generating service generating the media stream. Furthermore, the media service register 220 comprises a media stream generating service activator 226 arranged to, when the media request does not correspond to an active media stream generating service, send an activation request to the media service manager 230 for a media stream generating service generating the requested media stream. The register 222, the media request checker 224 and/or the media stream generating service activator 226 may be software and/or hardware implemented.

In addition to what is discussed above, the media service manager 230 is configured for setting up a media stream generating service generating a media stream within the networked system 100. The media service manager 230 comprises a media stream generating service activation request receiver 232, an installer 234, a networked computing device selector 236 and a database 238. The media stream generating service activation request receiver 232, the installer 234, the networked computing device selector 236 and the database 238 may be software and/or hardware implemented.

The media stream generating service activation request receiver 232 is arranged to receive an activation request for the media stream generating service generating the requested media stream.

The installer 234 is arranged to send an installation instruction to at least one of the plurality of networked computing device 10. The installation instruction comprises an instruction for installing the media stream generating service on the networked computing device 10.

The networked computing device selector 236 is arranged to select a networked computing device 10 onto which the requested media stream generating service is to be installed. The selection is based on at least one of data relating to network load of branches within the data network, available CPU processing power in the plurality of networked computing devices 10, availability of specific hardware or software capability in the plurality of networked computing devices 10, robustness of the branches within the data network, robustness of the plurality of networked computing devices 10 and nearness. A branch within the data network refers to a sub-portion of the data network.

The database 238 comprises media stream generating service software program portions possible to be installed at one or more of the plurality of networked computing devices. When installed the media stream generating service software program portions are configured to act as the media stream generating service.

According to one embodiment, the media service manager 230 may be registered in the media service register 220 as a media stream generating service that may provide any type of media stream within the networked system 100. Doing so properties of the media stream generating services generated at the media service manager 230 may be set such that it ensured that it is always the least desirable choice for a media stream to be generated by the media stream generating service at the media service manager 230. In this way, the media service manager 230 will receive any requests for a media stream that cannot otherwise be supported within the networked system 100.

According to this there will always be at least one match for any media stream, as the media service manager will be registered as a provider of all possible media streams. However, if there is a particular media stream generating service that is already generating a particular media stream, and a client requests that particular media stream, the particular media stream generating service will be selected as the most suitable rather than the media service manager.

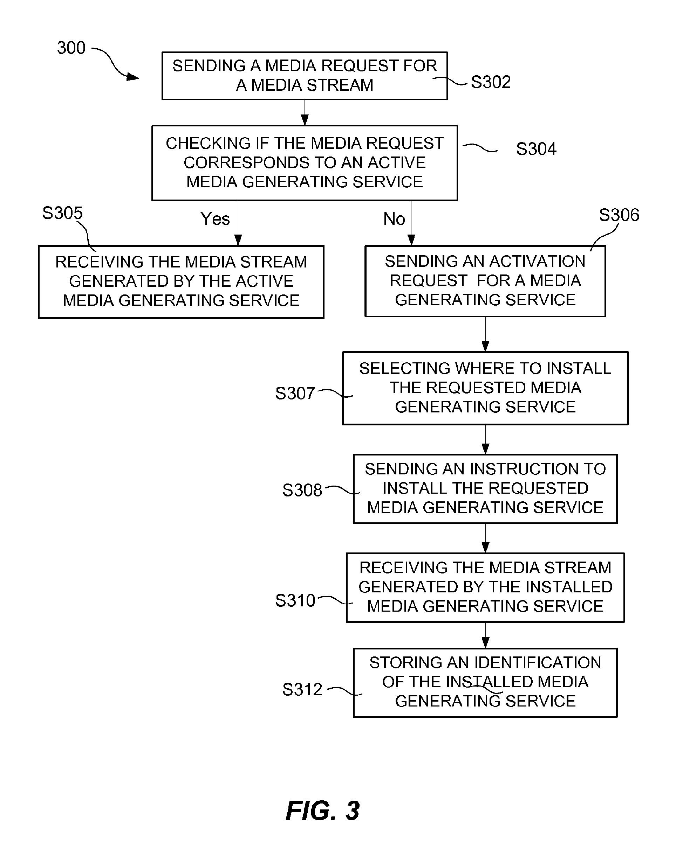

In Fig. 3 a method 300 for requesting and receiving a media stream in the networked system is illustrated. As a first act one of the networked computing devices 10 acting as a client is sending S302 a media request for the media stream to the media service register. The media stream request may comprise a media stream quality requested by the client. The media stream request may comprise a media stream origin referring to data pertaining to which media generating device that has generated the data comprised in the media stream. Hence, from which media generating device the media stream originates. As discussed above the media service register comprises a register of identifiers of active media stream generating services generating media streams within the data network and an address for accessing each corresponding media stream generating service.

Next checking S304, at the media service register, if the media request corresponds to an active media stream generating service generating the requested media stream is performed.

When the media request does correspond to an active media stream generating service the method 300 comprises receiving S305 at the client the media stream generated by the active media stream generating service generating the requested media stream.

When the media request does not correspond to an active media stream generating service the method 300 comprises sending S306 an activation request to the media service manager for a media stream generating service generating the media stream.

The method 300 may further comprise selecting S307, by the media service manager, one or more networked computing devices 10 to which the instruction to install the requested media stream generating service is to be sent. The selection is based on at least one of data relating to network load of branches within the data network, available CPU processing power in the plurality of networked computing devices 10, availability of specific hardware or software capability in the plurality of networked computing devices 10, robustness of the branches within the data network, robustness of the plurality of networked computing devices 10 and nearness.

The media service manager may further send S308 an installation instruction to install the requested media stream generating service at at least one of the plurality of networked computing devices 10.

The installed media stream generating service may generate a media stream from one or more already existing media streams by transcoding, splitting and/or stitching the one or more already existing media streams. The media stream generating service may generate the requested media stream such that the client may receive S310 the media stream generated by the installed media stream generating service.

The method 300 may further comprise receiving, at the client, a message comprising information instructing the client to receive the requested media stream from the installed media stream generating service.

The method 300 may further comprise storing S312 at the media service register an identification of the installed media stream generating service and an address for accessing the same.

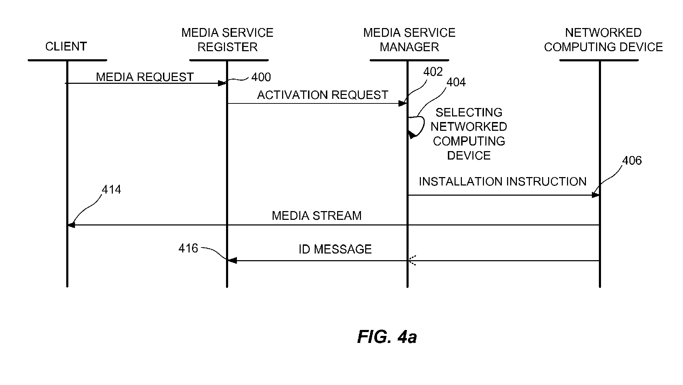

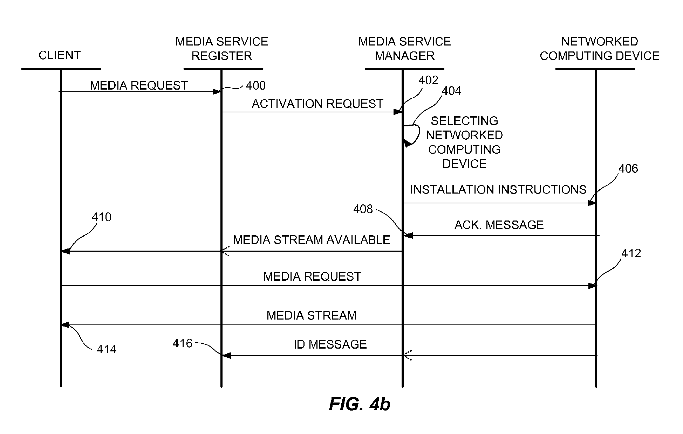

In Figs 4a and 4b two exemplified embodiments of the signaling that may be involved when requesting and receiving a media stream in the networked system are illustrated. It is to be understood that other embodiments of signaling may as well be used when requesting and receiving a media stream in the networked system.

Turning to the exemplified embodiment of Fig. 4a the signaling is started by a client sending, to the media service register, a media request 400 for a media stream having a specified configuration. The client is any networked computing device 10 of the networked system 100 having the ability to request, receive and/or play a media stream. Looking at Fig. 1, non-limiting examples of clients are a stationary computer 20, a laptop 22, a mobile phone 24 or a tablet 26. According to this exemplified embodiment the client requests a media stream having a configuration that is not directly supported by any of the active media stream generating services registered in the media service register. As non-limiting examples, there is no active media stream generating service providing a video stream in a codec or resolution requested by the client. After finding out that no active media stream generating service having the specified configuration (hence, a check at the media service register has resulted in that no active media stream generating service is arranged to generate a media stream corresponding to the requested media stream), the media service register sends an activation request 402 to the media service manager. The activation request 402 is a request to the media service manager to install a media stream generating service arranged to generate the requested media stream. The media service manager is configured to select 404 at least one networked computing device onto which the media stream generating service arranged to generate the requested media stream is to be installed. The selection 404 is based on at least one of data relating to network load of branches within the data network, available CPU processing power in the plurality of networked computing devices, availability of specific hardware or software capability in the plurality of networked computing devices, robustness of the branches within the data network, robustness of the plurality of networked computing devices and nearness. Upon selecting 404 the at least one networked computing device the media service manager sends an installation instruction 406 to the selected at least one networked computing device. The installation instruction 406 may comprise software to be installed as the media stream generating service arranged to generate the requested media stream. Alternatively or in combination, the installation instruction 406 may comprise information pertaining to where the at least one networked computing device may fetch the software to be installed as the media stream generating service arranged to generate the requested media stream. After installation of the media stream generating service arranged to generate the requested media stream the at least one networked computing device is arranged to start generating the requested media stream and send the requested media stream 414 to the client. Moreover, an ID message 416 is sent to the media service register. The ID message comprises information pertaining to an identification of the installed media stream generating service and an address for accessing the same. The ID message 416 may be sent directly from the at least one networked computing device to the media service register. Alternatively or in combination, the ID message 416 may be sent to the media service register via the media service manager.

Turning to the exemplified embodiment of Fig. 4b, the signaling up to the installation instruction 406 sent from the media service manger to the selected at least one networked computing device is the same as in Fig. 4a. Upon installation of the media stream generating service arranged to generate the requested media stream an acknowledgement message 408 is sent to the media service manager. The acknowledgement message 408 comprises information pertaining to that the media stream generating service arranged to generate the requested media stream is successfully installed at the at least one networked computing device. The acknowledgement message 408 may further also comprise information pertaining to an address for accessing the media stream generating service generating the requested media stream A media stream available message 410 is sent from the media service manager to the client. The media stream available message 410 may be sent directly from media service manager to the client. Alternatively or in combination, the media stream available message 410 may be sent to the client via the media service register. The media stream available message 410 comprises information pertaining to an address for accessing the media stream generating service generating the requested media stream. The client then sends a media request 412 for the requested media stream using the address for accessing the media stream generating service generating the requested media stream. The requested media stream 414 is then sent to the client. Also according to this embodiment the ID message 416 may sent to the media service register.

The person skilled in the art realizes that the present invention by no means is limited to the preferred embodiments described above. On the contrary, many modifications and variations are possible within the scope of the appended claims.

For example, the acknowledgment message 408 may also be sent from the at least one networked computing device directly to the media service register or to the media service register via the media service manager.

Moreover, the acknowledgment message 408 and/or the media stream available message 410 may comprise the information of the ID message 416. Hence, no specific ID-message 416 may in such case be sent.

Additionally, variations to the disclosed embodiments can be understood and effected by the skilled person in practicing the claimed invention, from a study of the drawings, the disclosure, and the appended claims.

## Claims

**1.** A method for requesting and receiving, at a client, a media stream in a system comprising the client, a media service register and a media service manager, all arranged to communicate within a data network comprising a plurality of networked computing devices, the method comprising:
sending, from the client, a media request for the media stream, to the media service register, the media service register comprising a register of identifiers of active media stream generating services generating media streams within the data network and an address for accessing each corresponding media stream generating service;
checking, at the media service register, if the media request corresponds to an active media stream generating service generating the requested media stream;
when the media request does not correspond to an active media stream generating service, sending an activation request to the media service manager for a media stream generating service generating the requested media stream;
sending, from the media service manager, an instruction to install the requested media stream generating service at at least one of the plurality of networked computing devices; and
receiving, at the client, the media stream generated by the installed media stream generating service.

**2.** The method according to claim 1, further comprising selecting, by the media service manager, a networked computing device to which the instruction to install the requested media stream generating service is to be sent, wherein the selection is based on at least one of data relating to network load of branches within the data network, available CPU processing power in the plurality of networked computing devices, availability of specific hardware or software capability in the plurality of networked computing devices, robustness of the branches within the data network, robustness of the plurality of networked computing devices and nearness.

**3.** The method according to claim 1 or 2, further comprising receiving at the client a message comprising information instructing the client to receive the requested media stream from the installed media stream generating service.

**4.** The method according to any one of claims 1-3, further comprising storing at the media service register an identification of the installed media stream generating service and an address for accessing the same.

**5.** The method according to any one of claims 1-4, wherein the installed media stream generating service is arranged to generate a media stream from one or more already existing media streams by transcoding, splitting and/or stitching the one or more already existing media streams.

**6.** The method according to any one of claims 1-4, wherein the media stream request comprises a media stream quality and/or a media stream origin.

**7.** A networked system for setting up a media stream generating service within a data network, the system comprising a plurality of networked computing devices, a client, a media service register and a media service manager, all arranged to communicate within the data network;
wherein the client is arranged to send a media request for the media stream to the media service register;
wherein the media service register comprises a register of identifiers of active media stream generating services generating media streams within the data network and an address for accessing each corresponding media stream generating service;
wherein the media service register further comprises a media request checker arranged to check if the media request corresponds to an active media stream generating service generating the media stream;
wherein the media service register further comprises a media stream generating service activator arranged to, when the media request does not correspond to an active media stream generating service, send an activation request to the media service manager for a media stream generating service generating the media stream;
wherein the media service manager comprises an installer arranged to send an installation instruction to at least one of the plurality of networked computing devices instructing the at least one of the plurality of networked computing devices to install the requested media stream generating service.

**8.** The networked system according to claim 7, wherein the client further comprises a media stream receiver arranged to receive the media stream generated by the installed media stream generating service from the at least one of the plurality of networked computing devices.

**9.** The networked system according to claim 7 or 8, wherein the media service manager further comprises a networked computing device selector arranged to select a networked computing device onto which the requested media stream generating service in to be installed, wherein the selection is based on at least one of data relating to network load of branches within the data network, available CPU processing power in the plurality of networked computing devices, availability of specific hardware or software capability in the plurality of networked computing devices, robustness of the branches within the data network, robustness of the plurality of networked computing devices and nearness.

**10.** The networked system according to any one of claims 7-9, wherein the media stream generating service is arranged to generate a media stream from one or more already existing media streams by transcoding, splitting and/or stitching the one or more already existing media streams.

**11.** A media service manager for setting up a media stream generating service generating a media stream within a networked system comprising a plurality of networked computing devices and the media service manager, all communicating within a data network, the media service manager comprising:
a media stream generating service activation request receiver arranged to receive an activation request for the media stream generating service generating the media stream; and
an installer arranged to send an installation instruction to at least one of the plurality of networked computing device, wherein the installation instruction comprises an instruction for installing the media stream generating service on the networked computing device.

**11.** The media service manager according to claim 10, further comprising a networked computing device selector arranged to select a networked computing device onto which the requested media stream generating service in to be installed, wherein the selection is based on at least one of data relating to network load of branches within the data network, available CPU processing power in the plurality of networked computing devices, availability of specific hardware or software capability in the plurality of networked computing devices, robustness of the branches within the data network, robustness of the plurality of networked computing devices and nearness.

**12.** The media service manager according to claim 10 or 11, wherein the media stream generating service is arranged to generate a media stream from one or more already existing media streams by transcoding, splitting and/or stitching the one or more already existing media streams.

**13.** The media service manager according to any one of claims 10-12, further comprising a database comprising media stream generating service generating software program portions possible to be installed at one or more of the plurality of networked computing devices as the media stream generating service.

## Amended claims

### Amended claims in accordance with Rule 137(2) EPC.

1. A method for requesting and receiving, at a client (210), a media stream (414) in a system (100) comprising the client, a media service register (220) and a media service manager (230), all arranged to communicate within a data network comprising a plurality of networked computing devices (10), the method comprising:
sending (S302), from the client, a media request (400) for the media stream, to the media service register, the media service register comprising a register (222) of identifiers of active media stream generating services generating media streams within the data network and an address for accessing each corresponding media stream generating service;
checking (S304), at the media service register, if the media request corresponds to an active media stream generating service generating the requested media stream;
when the media request does not correspond to an active media stream generating service, sending (S306) an activation request (402) to the media service manager for a media stream generating service generating the requested media stream;
selecting (S307; 404), by the media service manager, a networked computing device to which an instruction (406) to install the requested media stream generating service is to be sent, wherein the selection is based on at least one of data relating to network load of branches within the data network, available CPU processing power in the plurality of networked computing devices, robustness of the branches within the data network, robustness of the plurality of networked computing devices and nearness;
sending (S308), from the media service manager, the instruction to install the requested media stream generating service at the selected networked computing device; and
receiving (S310), at the client, the media stream generated by the installed media stream generating service.

2. The method according to claim 1, further comprising receiving at the client a message (410) comprising information instructing the client to receive the requested media stream from the installed media stream generating service.

3. The method according to claim 1 or 2, further comprising storing (S312) at the media service register an identification (416) of the installed media stream generating service and an address for accessing the same.

4. The method according to any one of claims 1-3, wherein the installed media stream generating service is arranged to generate a media stream from one or more already existing media streams by transcoding, splitting and/or stitching the one or more already existing media streams.

5. The method according to any one of claims 1-3, wherein the media stream request comprises a media stream quality and/or a media stream origin.

6. A networked system for setting up a media stream generating service within a data network, the system comprising a plurality of networked computing devices (10), a client (210), a media service register (220) and a media service manager (230), all arranged to communicate within the data network;
wherein the client is arranged to send a media request (400) for the media stream to the media service register;
wherein the media service register comprises a register (222) of identifiers of active media stream generating services generating media streams within the data network and an address for accessing each corresponding media stream generating service;
wherein the media service register further comprises a media request checker (224) arranged to check if the media request corresponds to an active media stream generating service generating the media stream;
wherein the media service register further comprises a media stream generating service activator (226) arranged to, when the media request does not correspond to an active media stream generating service, send an activation request (402) to the media service manager for a media stream generating service generating the media stream;
wherein the media service manager comprises:
a networked computing device selector (236) arranged to select a networked computing device onto which the requested media stream generating service in to be installed, wherein the selection is based on at least one of data relating to network load of branches within the data network, available CPU processing power in the plurality of networked computing devices, robustness of the branches within the data network, robustness of the plurality of networked computing devices and nearness; and
an installer (234) arranged to send an installation instruction (406) to the selected networked computing device instructing the networked computing device to install the requested media stream generating service.

7. The networked system according to claim 6, wherein the client further comprises a media stream receiver arranged to receive the media stream generated by the installed media stream generating service from the at least one of the plurality of networked computing devices.

8. The networked system according to claim 6 or 7, wherein the media stream generating service is arranged to generate a media stream from one or more already existing media streams by transcoding, splitting and/or stitching the one or more already existing media streams.

9. A media service manager for setting up a media stream generating service generating a media stream (414) within a networked system (100) comprising a plurality of networked computing devices (10) and the media service manager, all communicating within a data network, the media service manager comprising:
a media stream generating service activation request receiver (232) arranged to receive an activation request (402) for the media stream generating service generating the media stream;
a networked computing device selector (236) arranged to select a networked computing device onto which the requested media stream generating service is to be installed, wherein the selection is based on at least one of data relating to network load of branches within the data network, available CPU processing power in the plurality of networked computing devices, robustness of the branches within the data network, robustness of the plurality of networked computing devices and nearness; and
an installer (234) arranged to send an installation instruction (406) to the selected networked computing device, wherein the installation instruction comprises an instruction for installing the media stream generating service on the selected networked computing device.

10. The media service manager according to claim 9, wherein the media stream generating service is arranged to generate a media stream from one or more already existing media streams by transcoding, splitting and/or stitching the one or more already existing media streams.

11. The media service manager according to claim 9 or 10, further comprising a database (238) comprising media stream generating service generating software program portions possible to be installed at one or more of the plurality of networked computing devices as the media stream generating service.
